Europäisches Patentamt

**European Patent Office**

Office européen des brevets

(11) Publication number: **0 194 303 B1**

# EUROPEAN PATENT SPECIFICATION
## published in accordance with Art. 158(3) EPC

(45) Date of publication of patent specification: **07.08.91**  (51) Int. Cl.⁵: **A21D 2/00, A23L 1/182**

(21) Application number: **85904732.6**

(22) Date of filing: **11.09.85**

(86) International application number: **PCT/US85/01746**

(87) International publication number: **WO 86/01683 (27.03.86 86/07)**

(54) **SYNTHESIZED KERNEL GRAIN OR LEGUMES.**

(30) Priority: **11.09.84 US 649444**

(43) Date of publication of application:
**17.09.86 Bulletin 86/38**

(45) Publication of the grant of the patent:
**07.08.91 Bulletin 91/32**

(84) Designated Contracting States:
**AT BE CH DE FR GB IT LI LU NL SE**

(56) References cited:
| | |
|---|---|
| EP-A- 0 105 100 | GB-A- 2 145 319 |
| US-A- 2 914 005 | US-A- 3 071 471 |
| US-A- 3 365 299 | US-A- 4 085 234 |
| US-A- 4 101 683 | US-A- 4 325 976 |

(73) Proprietor: **COX, James P.**
**246 East Bartlett Road**
**Lynden, WA 98264(US)**

Proprietor: **COX, Jeanne M.**
**246 East Bartlett Road**
**Lynden, WA 98264(US)**

(72) Inventor: **COX, James P.**
**246 East Bartlett Road**
**Lynden, WA 98264(US)**
Inventor: **COX, Jeanne M.**
**246 East Bartlett Road**
**Lynden, WA 98264(US)**

(74) Representative: **Everitt, Christopher James Wilders et al**
**F.J. CLEVELAND & COMPANY 40/43 Chancery Lane**
**London WC2A 1JQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Technical Field

This invention relates to a synthesized kernel product composed of kernels that have been synthesized from particles or flour of seeds or fruits of cereals such as rice and/or legumes such as beans.

Background Art

Gorozpe, U.S. Patent 2,914,005, issued November 24, 1959, discloses apparatus for preparing a quick-cooking rice product produced from broken rice. The process of producing the product includes rapidly drying broken rice to cause it to check. The cracks in the checked rice enable ready permeation of moisture. The rice is then hydrated to swell it and it is milled to form small particles, preferably about 1/64 inch (0.4 mm) in diameter or about 40 mesh screen size. The milling forms a very porous, fluffy, granular, ball-like material. This fluffy granular material is then steamed or otherwise heated to gelatinize the particles throughout, after which such gelatinized particles are formed into grains by being extruded with the least pressure possible and without kneading so as to preserve the porous structure of the particles, but cause them to adhere together. The product is extruded in small rod-like strings which are in cross section of a size about equal to the thickness of whole rice grains and these strings are cut into short lengths to form individual grains about equal in size to, but preferably larger than, the better grades of whole grain rice. The extruded strings may be oval in section and cut at an angle to provide pointed ends. The extruded grains are fed to a predryer where they are dried for about 5 minutes at a temperature of about 149.9° C (300 degrees F) to lover the moisture content to about 20 to 25 percent and the predried grains are then treated in a final dryer for about 10 minutes at a maximum temperature of 65.6 degrees C (150 degrees F) to reduce the moisture content to the usual 10 to 14 percent.

The later Gorozpe U.S. patent 3,071,471, issued January 1, 1963, also relates to a quick-cooking rice product that is made from broken rice. In the process for making this product the rice is gelatinized before grinding instead of merely being hydrated and ungelatinized as in the earlier Gorozpe patent 2,914,005. In this instance the rice is gelatinized and crushed two or three times to reduce it to a very porous, fluffy, flaky material formed by a multiplicity of gelatinized starch cells (column 1, lines 59 to 63, column 4, lines 55 to 72 and column 10, lines 32 to 49). In this instance, the rice having a normal moisture content of 10 to 14 percent is dried quickly to reduce the moisture content by about 2 to 5 percent which causes checking (column 3, lines 2 to 12). The drying is accomplished at a temperature between 50 degrees C and 70 degrees C (122 degrees F and 158 degrees F) for between 30 and 60 minutes, preferably 60 degrees C (140 degrees F) for a period of 30 minutes so that the moisture content is reduced quickly by about 3 percent (column 3, lines 12 to 33).

The dried checked rice is next subjected to washing and hydrating steps until the moisture content reaches 38 to 40 percent (column 3, lines 37 to 59). The hydrated rice may be gelatinized in a single stage by vet steam or hot water to about 90 to 95 percent of complete gelatinization after which the gelatinized rice is broken into lumps having a moisture content of about 30 to 45 percent. (Column 4, lines 12 to 27). Next, the gelatinized lumps are dried to reduce the moisture content to about 15 to 25 percent and are then broken up on breaking rolls to a size of about 1/16 inch (1.6 mm) to 1/8 inch (3.2 mm) and further dried to a moisture content of about 10 to 14 percent (column 4, lines 39 to 49).

Alternatively, the rice may be gelatinized in two stages, the first stage comprising partially gelatinizing the hydrated rice to at least 50 percent gelatinization followed by gelatinizing the rice in a second stage to about 80 to 95 percent of complete gelatinization. Further alternatively, the rice may be gelatinized in a sequence of three stages reaching 80 to 95 percent of complete gelatinization. (Column 4, lines 55 to 63). Partially gelatinized rice may be extruded with sufficient pressure so that it does not come apart during cooking (column 5, lines 6 to 14). The extruder forms the rice into whole grains which are subjected to a further gelatinization with wet steam at a temperature of about 194 degrees F. (90 degrees C.) for a period of 20 to 90 seconds and 40 to 50 percent moisture. The grains may be gelatinized a third time to produce a moisture content not more than 65 percent. (Column 5, lines 38 to 42). The rice grains are then cooled, and dried to reduce the moisture content to 10 to 14 percent. (Column 5, lines 22 to 53).

The more recent Harrow et al. U.S. patent 4,325,976, issued April 20, 1982, discloses a process for making a reformed rice product from flour which can include wheat flour, potato flour, corn flour, tapioca flour, waxy maize flour and rice flour, but it is preferred that at least a major portion of the flour be rice flour (column 1, lines 40 to 48). A portion of the flour can be pregelatinized and a portion ungelatinized, but not less than 30 percent of the flour used is pregelatinized and the amount of pregelatinized flour should not exceed 70 percent by weight (column 1, lines 50 to 57). To the flour is added sodium chloride in a proportion between 4 percent and 12 percent by weight (column 1, lines 59 to 65) and fat which may be pure fat or fat from whole egg or egg yolk powder (column 2, lines 32 to 58). Also ammonium carbonate or an alkali metal bicarbonate and an alkali metal hydrogen tartrate, preferably potassium hydrogen tartrate and sodium bicarbonate can be added as puffing aids (column 1, line 66 to column 2, line 9).

The process steps include (a) mixing the dry composition with water to produce an extrudable dough containing water in an amount of 20 percent to 30 percent of the dough by weight, (b) extruding the dough to form simulated rice grains and (c) drying the simulated rice grains at a temperature up to 150 degrees C. to a moisture content not exceeding 15 percent by weight of the resulting rice product (column 2, line 64 to column 3, line 5). The extruding is accomplished using a conventional low pressure pasta-type extruder through a die having generally elliptical apertures and the dough is cut as it is extruded by a rotating cutting knife (column 3, line 6 to 14). The extruded rice grains are then dried at a temperature preferably from 130 degrees to 150 degrees C. to a final moisture content from 4 percent to 8 percent by weight (column 3, lines 27 to 35).

No process is known in which alginate or other binder material is used in conjunction with a setting or gelling agent in the production of a synthesized kernel grain or legume product, but Willock U.S. patent 3,365,299, issued January 23, 1968 proposes the use of a seaweed gum or alginate mucilage coating for rice grains in producing a rice pudding.

Kamada et al. U.S. Patent 4,101,683, issued July 18, 1978 discloses the use of alginate among other polysaccharides (column 3, lines 49 to 51) for use in connection with rice. The process of this patent gelatinizes the rice starch by the first step of puffing rice grains to a high degree as stated in column 5, lines 57 and 58. Such puffing and gelatinizing step is accomplished by heating the rice grains in a closed container at an elevated temperature under increased pressure and releasing the rice grains into the atmosphere to allow them to puff, or heating the rice grains by means of heated air or by high frequency waves as described in column 3, lines 20 to 25.

The second step in the treatment is to add a thickener to the puffed rice grains as described in column 3, lines 40 to 68, which thickener may be polysaccharide, including agar and alginate, or gums including guar gum, or artificially produced thickeners, or microorganically produced thickeners (column 3, lines 49 to 68). The thickener is applied to the puffed rice by immersing the puffed rice in an aqueous solution containing the thickener (column 4, lines 19 to 21), or by spraying or sprinkling the aqueous solution on the puffed rice (column 4, lines 21 to 23).

The final third step is to dry the puffed rice with which the thickener has been incorporated, either under normal atmospheric pressure or under vacuum, either in the presence or in the absence of heating, as described at column 5, lines 20 to 24. In consequence of the gradual vaporization of water, the puffed rice diminishes in volume eventually to approach the volume of raw rice (column 5, lines 38 to 40). The resulting rice will be fast cooking (column 5, lines 42 and 43) in one to two minutes in hot water heated in advance to about 80 degrees C. (column 6, lines 6 to 8). The rice can even be rehydrated at room temperature by being soaked in water for about 30 minutes (column 6, lines 16 to 18).

While the use of a thickener as described in Kamada et al. U.S. patent 4,101,683 does not utilize any setting agent, the use of such an agent is disclosed in Kamada et al. U.S. patent 4,085,234, issued April 18, 1978. This patent discloses a rice product made by puffing rice to a high degree by first treating the rice grains in a closed container kept at an elevated temperature and releasing the rice grains into the atmosphere for thereby allowing them to puff to a degree from 6 to 16 times, and preferably 10 to 12 times, as large as the raw rice grains (column 3, lines 17 to 36). The puffed rice grains are then immersed in or sprayed or sprinkled with an aqueous solution containing at least one polysaccharide thickener which is gelled by metallic ions. Examples of such polysaccharides are alginic acid, its salt, carrageenin, pectin, etc. (column 3, lines 43 to 53).

As in the Kamada et al. U.S. patent 4,101,683, the puffing step of this patent gelatinizes the rice starch as stated at column 5, lines 46 and 47. The puffing may expand the rice grains to a volume six times as large as normal rice grains (column 6, line 22), or 11 times as large as ordinary rice grains (column 6, line 44), or 15 times as large as ordinary rice grains (column 6, line 60). Also a thickener such as sodium alginate can be incorporated in the puffed rice grains by immersing the puffed rice grains in a thickener solution (column 6, lines 62 and 63), or by spraying the thickener onto the rice grains (column 6, lines 23 to 25).

After the thickener has been incorporated in the puffed rice grains the third step is to immerse the treated puffed rice in an aqueous solution containing metallic ions capable of inducing gelation of the thickener, or to spray or sprinkle the aqueous solution on the puffed rice, as stated at column 4, lines 14 to 17. The expression "aqueous solution containing metallic ions" includes aqueous solutions prepared by addition of metallic salts, solutions prepared by an ion exchange treatment, naturally occurring mineral waters containing metallic ions and natural aqueous solutions which originate in animals and plants (column 4, lines 25 to 33).

Examples of the metallic salts include calcium salts, potassium salts, magnesium salts and other similar metallic salts of carbonic acid, hydrochloric acid, sulfuric acid, phosphoric acid, acetic acid, lactic acid, citric acid, ascorbic acid, glycerophosphoric acid and other similar acids, as stated at column 4, lines 37 to 43. The metallic ions are stated to be capable of acting upon the thickener to be gelled and consequently inducing gelation (column 4, lines 44 to 46). A specific example is the combination of sodium alginate and calcium lactate (column 6, lines 24 and 27). Another example is a low methyl ester pectin and calcium chloride (column 6, lines 46 to 48). A further example uses the combination of sodium alginate and calcium lactate (column 6, lines 62, 64 and 65). Another example proposes the combination of calcium and potassium-sensitive carrageenin and calcium lactate (column 7, lines 11 and 13).

After the rice has been treated with the thickener and the metallic salt the puffed rice into which the thickener or the gelled thickener has been incorporated is dried under normal atmospheric pressure or under vacuum to produce a fast-cooking rice (column 5, lines 8 to 19). During the drying step the puffed rice diminishes in volume to. approach the volume of raw rice, while the incorporated gelled thickener is retained throughout from the surface to the inside center of the individual grains (column 5, lines 27 to 30).

EP-A-0105100 discloses a process for the production of pasta based on starchy materials.

In one aspect of the present invention there is provided a process for producing an ungelatinized synthesized non-pasta grain or legume product which comprises powdering grain or legume material, mixing the powdered grain or legume material with a fluid binder to produce formable dough containing from 2 to 3 times as much powdered material as fluid binder, forming the dough into synthesized kernels, and exposing the synthesized kernels to a setting agent to set the binder,

ID another aspect of the present invention there is provided a process for producing an ungelatinized synthesized non-pasta grain or legume product which comprises powdering grain or legume material, mixing the powdered grain or legume material with aqueous liquid to produce formable dough, forming the dough into synthesized kernels, supplying binder for the kernel-forming material, and exposing the synthesized kernels to a setting agent containing material adequate to set or gel the binder.

The synthesized kernels may be produced from a single variety, or a composite of more than one variety, of grain and/or legumes. Such kernels may have normal cooking characteristics or be quick-cooking. The common characteristic of such kernels is that they embody a binder set by the action of a setting agent. The source material for synthesizing kernels from powder may be produced from broken or malformed grains, but the kernels formed are uniformly consistent, coherent, firm and have a natural tast or improved flavor, Also, the synthesized kernels of grain or legume material have a natural or improved appearance, texture and nutritional value. Moreover, the grain or legume kernels will have as good or better keeping qualities than corresponding natural grain or legume products. The kernels can incorporate coloring and/or flavoring additives including sauces which will permeate the kernels instead of being carried only as a surface coating. The synthesized kernels may also include nutrient, mineral and/or vitamin additives.

A complete food product, particularly for human beings, can be provided in the form of synthesized grains, especially rice, in which all of the grains will be of substantially the same composition.

Products incorporating synthesized kernels can be cooked in the usual way, can be quick-cooking or can even be palatable without requiring a final cooking step immediately before being eaten. To synthesize the kernels of grains or legumes, grains or legumes which may be broken or otherwise undesirably defective can be ground or otherwise comminuted to powder or flour, the powder or flour can be mixed with a settable binder to form a dough and such dough can be formed into synthesized kernel shapes such as by compression die molding or by extruding strings and cutting these strings into the synthesized kernels, and applying a setting agent to the formed kernels to set the binder, after which the synthesized kernels can be dried to a normal moisture content. The resulting kernels may be uncooked or may have been partially or completely precooked. Alternatively the flour or powder can be mixed with an aqueous liquid to form a plastic mass or dough which can be molded or extruded and the resulting grains stabilized by application to them of a binder and setting agent for the binder, after which the synthesized grains are dried.

Best Mode for Carrying Out the Invention

In this description, the term kernel is used to designate whole seeds or fruit of grain, such as rice, wheat and barley, or legumes, such as peas and beans, including kidney beans, lima beans and soy beans, and synthesized kernels composed of a blend or mixture of such seeds or fruit. In accordance with the present invention, the kernels are synthesized from powder. Powder components derived from various types of seeds or fruit can be combined in producing synthesized kernels. It is preferred that the kernels be synthesized from powder of seeds or fruit having particles small enough to pass through a 841 x $10^{-6}$m (No. 20 U.S. standard) screen mesh but which will be retained on a 74 x $10^{-6}$m (No. 200 U.S. standard) screen mesh.

The process of producing synthesized kernels includes making a fluid binder such as thin paste, mixing such fluid binder with grain and/or legume powder to form a soft doughy material, extruding such doughy material into strings, severing such strings into kernels which fall into water at or near boiling temperature and containing binder-setting or binder-gelling agent, cooking the kernels for a period of 3 to 20 minutes in the hot water, removing the cooked kernels from the water, draining the kernels and drying, canning or freezing the kernels. The synthesized kernels produced by such process can have a form resembling the seeds or fruits of a natural product such as rice grains or beans. The resulting kernels will, cook quickly, such as in approximately 5 minutes.

The binding material of the fluid binder may be algin such as sodium alginate, seaweed derivative, chitin material such as chitosan, chitosamine, chitose or other chitin derivative from fungi and/or crustacean shells, proteinaceous material including albumin, gelatin and gluten, pectic substances including pectin, agar-agar, carrageein, and gums including carob gum, guar gum and gum tragacanth.

If algin is used for the binder it may be of any viscosity, including the low viscosity type from 0.05 to 0.1Nsm$^{-2}$ (0.5 to 1 poise) and the high viscosity type from 0.8 to 1.0 Nsm$^{-2}$ (8 to 10 poises). If the algin is of the low viscosity type, the fluid binder may be principally water, containing 0.1 percent to 15 percent by volume of algin, preferably 3 1/2 percent to 6 percent. If high viscosity algin is used in the binder the water may contain from 0.1 percent to 12 percent of algin by volume, preferably 0.5 percent to 3 percent.

Albumin used for the binder material may be in the form of fresh or dried whole egg albumin. If albumin alone is used the amount should be from 10 percent to 100 percent of the water by weight. If the synthetic kernel product being produced is rice it is desirable for at least some of the fluid binder to be albumin, or albumin provided otherwise, because albumin restores a strong natural flavor to the rice. To obtain this desirable result an amount of albumin equal to 1 percent to 10 percent of the amount of water in the fluid binder should be provided for the synthetic kernel rice either as part of the fluid binder or entirely seperate from the fluid binder at any stage during the kernel-forming process simply to enhance the flavor of the rice.

Whatever type or types of binding material are utilized in the fluid binder the total amount of binding material should be within the range of 0.1 to 15 percent of the water by weight.

In producing synthesized kernels, whether of a single type of grain or legume or of a composite type, the fluid binder can be mixed with the powdered material of the seed or fruit, whether grain or legume, to make a dough of soft consistency suitable for extruding in proportions of 2 or 3 times as much kernel-forming powder as fluid binder by volume, preferably about 2 1/2 times as much, for example.

For making rice kernels, rice powder and fluid binder may be extruded by a press type of extruder such as that disclosed, for example, in Gorozpe U.S. patent 2,914,005 Figures 3 and 8, described at column 6, lines 39 to 71, or in Gorozpe U.S. patent 3,071,471 at column 10, line 73 to column 11, line 14, or in Harrow et al. U.S. patent 4,325,976 at column 3, lines 6 to 26.

The soft dough can be extruded with light pressure. As the dough is extruded it is formed into kernels closely resembling natural kernels, such as of rice or beans.

In carrying out one process according to the present invention, the synthesized kernels fall from the extruder into a body of water containing binder-setting or binder-gelling material which preferably is a water-soluble calcium salt, such as calcium chloride $CaCl_2$ or calcium lactate $(CH_3CHOHCOO)_2$ $Ca.5H_2O$, but other water-soluble calcium salts could be used instead, such as calcium acetate $Ca(CH_3COO)_2.H_2O$, calcium acetylsalicylate $C_{18}H_{14}CaO_8$, calcium aluminosilicate $CaAl_2S_2O_8$, calcium ascorbate $C_{12}H_{14}CaO_{12}$, calcium bisulfite $Ca(HSO_3)_2$, calcium carbamate $C_2H_4CaN_2O_4$, calcium calcium citrate $Ca_3(C_6H_5O_7)_2.4H_2O$, calcium formate $C_2H_2CaO_4$ or $Ca(HCO_2)_2$, calcium glycerophosphate $C_3H_7CaO_6P$, calcium phosphate monohydrate $CaH_4(PO_4)_2.H_2O$, also known as monobasic calcium phosphate, primary calcium phosphate $CaH_4(PO_4)_2$, secondary calcium phosphate dihydrate $CaHPO_4.2H_2O$, also known as dibasic calcium phosphate, secondary calcium phosphate $CaHPO_4$, tertiary calcium phosphate $Ca_3(PO_4)2$, also known as tribasic calcium phosphate, calcium gluconate $[HOCH_2(CHOH)_4COO]_2$ $Ca.H2O$, calcium sulfate dihydrate $CaSO_4.2H_2O$ and calcium tartrate $C_4H_4O_6$ $Ca.4H_2O$.

Also calcium carbonate $CaCO_3$, calcium oxalate $CaC_2O_4.H_2O$, or calcium sulfate $CaSO_4$ can be used notwithstanding their low solubility if they are converted to a soluble salt such as calcium acetate, calcium adipate, or calcium citrate by reaction with acetic acid, $CH_3COOH$, adipic acid $HOOC(CH_2)_4COOH$, and/or citric acid $HOOCCH_2C(OH)COOHCH_2COOH$, respectively.

The amount of calcium salt may be within the range of 0.01 30 to 10 percent of the water by volume, preferably about 0.03 percent. Such material sets or gels the binder so as to produce firm, coherent, stabilized, synthesized kernels.

If it should be desired to retard or prolong the effect of the setting or gelling agent, sodium carbonate $Na_2CO_3$, sodium citrate $Na_3C_6H_5O_7$, disodium phosphate $Na_2HPO_4$, trisodium phosphate $Na_3PO_4$, sodium hexametaphosphate $(NaPO_3)_6$, tetrasodium pyrophosphate $Na_4P_2O_7$, sodium polyphosphate $Na_{n+2}P_nO_{3n+1}$, or sodium tripolyphosphate $Na_5P_3O_{10}$ in an amount of 0.01 percent to 20 percent by weight can be included in the fluid binder.

Another procedure for deferring or extending the setting or gelling action of calcium is to utilize calcium carbonate or calcium sulfate as the source of calcium and restrict the access of acid such as acetic acid, adipic acid, citric acid, fumaric acid, gluconic acid, glutaric acid, lactic acid, malic acid, succinic acid or tartaric acid or d gluconolactone $C_6H_{10}O_6$ to react with the substantially insoluble calcium salt for producing soluble calcium salt slowly.

If chitin material is used for the fluid binder sulfuric acid or phosphoric acid or calcium ions or magnesium ions will set or gel the binder.

If pectin material is used as the fluid binder the setting material may be an edible acid such as acetic acid, adipic acid or citric acid.

If the fluid binder is albumin, seaweed derivative or agar agar the setting or gelling agent can be simply a bath of hot water into which the synthesized kernels are deposited, provided that the temperature of the water is in excess of 150 degrees F. (66 degrees C.), preferably 200 degrees F. (94 degrees C.) or more, which acts to coagulate the albumin.

If the setting liquid bath is hot, such as substantially boiling, the synthesized kernels can be cooked for a period of 3 to 20 minutes after which the kernels are removed from the water, drained and rinsed in cold water. The synthesized kernels may then be dried in a hot air dryer, such as a food dehydrator, to reduce the moisture content of the synthesized kernels to a value of 10 percent to 13 percent by weight, which requires drying for a period of about 2 1/2 hours at a temperature of about 140 degrees F. (60 degrees C.) if the kernels are adequately exposed to the hot air by being in a thin layer or stirred. The resulting synthesized kernel product is quick-cooking which will cook in approximately 5 minutes. Rice may, for example, be mixed with equal parts of water by volume and the water heated to bring it to a boil after which the heat source is removed. The water will be absorbed in approximately 5 minutes to leave a very palatable moist-dry rice.

Alternatively the synthesized kernels can be canned or frozen in either partially cooked or completely cooked condition.

One hundred grams of dry powdered rice will increase in weight to approximately 269 grams of synthesized grain rice when it is removed from the binder setting or gelling liquid and drained before being dried. After the water has been removed from the synthesized rice grains by drying, the remaining rice will weigh approximately 82 to 98 grams depending on the residual moisture content. If the powder is precooked it will tend to swell considerably more.

Flavoring, nutrients, fortifying substances and/or color can be added to the rice and binder liquid mix dough before being extruded and such additions will permeate the dough thoroughly and uniformly. Such uniform permeation will persist in the synthesized grains instead of being applied to kernels as a coating. For example, 20 percent to 35 percent of the dough mix by volume could be cheese, or 5 percent of the dough by volume could be butter, coconut fat or olive oil. Other types of additives in proportions from 5 percent to 30 percent of the dough by volume, depending on the ingredient used and the color or flavor desired, include curry, coconut, chili powder, soya sauce or other soya derivatives, albumin such as egg, milk, sugar, salt, pasta, vanilla, comminuted green peppers, tomatoes or corn and spices such as ginger, pepper, sage, cinnamon, cloves, garlic, onion and origanum. Also a small amount of monosodium glutamate can be included to enhance the flavor.

Vitamins, minerals, proteins, fat, oil and/or amino acids could be added to various grains and/or legumes in producing the synthesized kernels, especially for deprived people. The synthesized grain and/or legume kernels are substantially homogeneous and constitute a complete food complex incorporating properly balanced proportions of carbohydrate provided by the grain or legumes, protein, fat and/or oil. The major source of nutrition and energy for people is carbohydrates, proteins and fats or oils. Van Nostrand's Scientific Encyclopedia, Sixth Edition, states in the definition of PROTEIN at the middle of column 1, on page 2335, that on a weight basis proteins are second only to water in their presence in the human body. About 50 percent of the body's dry weight is made up of numerous proteins distributed 33 percent in muscles, 20 percent in bones and cartilage, 10 percent in skin and 37 percent in numerous other body tissues. The importance of protein in food for humans is therefore evident. Proteins are synthesized by the body and are constructed from a wide variety of amino acids.

The desirability of supplementing the carbohydrate content of rice with amino acids for producing proteins has been recognized. Under the definition of AMINO ACIDS, Van Nostrand's Scientific Encyclopedia, Sixth Edition, states at the middle of column 1, on page 118:

"Before cooking, rice must be washed (polished) with water. In some countries, the cooking water is allowed to boil over or is discarded. This significant loss of fortified amino acids must be considered. L-Lysine hydrochloride (0.2%) and L-threonine (0.1%) are shaped like rice grain with other nutrients and enveloped in a film. The added materials must hold the initial shape and not dissolve out during boiling, but be easily freed of their coating in the digestive organs."

Human and animal diets have been enriched with free amino acids such as lysine, methionine, threonine and tryptophan.

Van Nostrand's Scientific Encyclopedia, Sixth Edition, in defining AMINO ACIDS at page 117, middle of column 2, states (emphasis in original):

"The scores of proteins which make up about one-half of the dry weight of the human body and that are so vital to life functions are made up of a number of amino acids in various combinations and configurations. . . .

Although the proteins resulting from amino acid assembly are ultimately among the most important chemicals in the animal body (as well as plants), the so-called infrastructure of the proteins is dependent upon the amino acid building blocks. Although there are many hundreds of amino acids, only about 20 of these are considered very important to living processes, of which six to ten are classified as essential. Another three or four may be classified as quasi-essential, and ten to twelve may be categorized as, nonessential. . . . Generally, those amino acids which the human body cannot synthesize at all or at a rate commensurate with its needs are called essential amino acids (EAA). In other words, for the growth and maintenance of a normal healthy body, it is essential that these amino acids be ingested as part of the diet and in the necessary quantities."

In some instances discretion must be used in selecting materials to be used by the body for producing proteins for incorporation in the synthesized grains and/or legumes of the present invention. Proteins are peptides made up of two or more amino acids covalently bound in an amide linkage. Thus a peptide is a chain of amino acid residues. All amino acids contain nitrogen, and sometimes the body has an oversupply of nitrogen. In such cases, instead of using amino acids as such, amino acid analogues from which nitrogen has been completely or principally removed can be utilized. Suitable keto- and hydroxy-analogues which are free of nitrogen corresponding to essential and beneficial amino acids can be used in place of the corresponding amino acids themselves. In such instances the analogue will combine with the excess nitrogen of the body to serve the dual function of enabling the body to produce proteins and removing some of the nitrogen from undesirable forms in the body. Such amino acids and their corresponding keto-analogues and hydroxy-analogues are listed below.

## ESSENTIAL AMINO ACIDS AND ANALOGUES

| Amino Acid | Keto-analogue | Hydroxy-analogue |
|---|---|---|
| L-leucine | a-ketoisocaproic acid | |
| L-valine | a-ketoisovaleric acid | |
| L-isoleucine | (R,S)-a-keto-b-methylvaleric acid | |
| L-lysine | | |
| L-phenylalanine | phenylpyruvic acid | L-phenyllactic acid |
| L-threonine | | |

| | | |
|---|---|---|
| L-methionine | a-keto-g-methiol-butyric acid | (D,L)-a-hydroxy-g-methiol-butyric acid |
| L-tryptophan | indolepyruvic acid | indolelactic acid |

### BENEFICIAL AMINO ACIDS AND ANALOGUES

| Amino Acid | Keto-analogue | Hydroxy-analogue |
|---|---|---|
| L-histidine . | imidazolepyruvic acid | imidazolelactic acid |
| L-tyrosine | P-hydroxyphenyl-pyruvic acid | L-p-hydroxyphenyl-lactic acid |
| L-cystine | BB'-dithiopyruvic acid | L-BB'-dithiodi-lactic acid |
| L-cysteine | B-mercaptopyruvic acid | L-B-mercaptolactic acid |
| L-arginine | | |
| L-ornithine | | |

Any of these amino acid and analogue structures in any combination and in appropriate quantities can be mixed into the material from which the kernels are synthesized in accordance with the present invention.

For people with excessive nitrogen or ammonia in the body, such as those suffering from hyperammonemia and portal systemic encephalopathy, the amino acids ornithine and arginine may be incorporated in the kernels.

By incorporating a proper type and proportion of amino acids or their analogues in the material from which the grain or legume kernels of the present invention are synthesized, a properly balanced diet is assured simply from consumption of the grains and/or legumes of the present invention. To make a complete food complex, an appropriate amount of oil and/or fat can also be incorporated in the material used for preparation of the kernels.

Rice is an excellent source of carbohydrate, particularly for reducing diet purposes, because digestion of the rice requires considerable time so that the carbohydrate is converted into sugar usable by the body over a period of several hours instead of being available to the bloodstream quickly, such as in a period of less than an hour, as is the case with sugar or compounds readily converted by the body into sugar. By associating amino acid or amino acid analogue and, if desired, oil and/or fat intimately with carbohydrate, all of the components become available for body building over an extended period of time instead of quickly. Such result can be achieved by incorporating the amino acid or analogue with powdered rice and, if desired, with an appropriate amount of oil or fat in the dough from which the synthesized rice grains are extruded.

A representative extrudible dough could contain the following ingredients by weight in addition to the binder and flavoring, if any:

| | |
|---|---|
| carbohydrate | 25.00% to 99.00% |
| protein | 1.00% to 75.00% |
| oil or fat | 0.00% to 50.00% |

A preferred formula would have the following proportions of ingredients by weight:

| | |
|---|---|
| carbohydrate | 75.00% |
| protein | 20.00% |
| fat | 5.00% |

Because each kernel provides a complete balanced food in itself, a diet providing any desired number of joules can be specified by simply prescribing the proper quantity of the synthesized rice.

For an adult of average size, Van Nostrand's Scientific Encyclopedia, Sixth Edition, states on page 2339, at column 1, under the definition of PROTEIN that the daily requirement is 70-80 grams of protein. Actually, the bodily requirement depends on the size of a person, and it is perhaps more accurate to state that the daily bodily requirement for protein is .7-.8 grams of protein per kilogram of body weight.

Thus, for example, if a low fat diet containing 10086 kJ (2,400 calories) per day were desired, the amount of synthesized rice to be eaten during the day could be 590 grams, containing 560 grams of carbohydrate, 25 grams of protein and 5 grams of fat. A higher fat diet providing 10056 KJ (2,400 calories) could be 520 grams, containing 400 grams of carbohydrate, 70 grams of protein and 50 grams of fat.

Amino acids and their analogues have very unpleasant tastes and, consequently, it may be desirable to add pleasant flavoring materials such as curry, coconut or chile powder, as suggested above, where amino acids or their analogues are incorporated in the synthesized kernels. The synthesized kernel grain or legume product would, however, be available in a form which was familiar and to which deprived people are accustomed. Moreover such synthesized grain or legume product would be particularly beneficial because it can be prepared for consumption quickly and with minimum energy requirements.

Different types of rice flour can be mixed such as blending wild rice flour and white rice flour. The resultant synthesized grains have a mild wild rice flavor.

A representative example of a process for making a synthesized rice grain product is the following formulation:

Fluid Binder

6 teaspoons (17g or 0.6 oz) of low viscosity sodium alginate mixed with 2 cups (450g or 16 oz) of water (3.75 percent sodium alginate by volume). The algin and water mixture was homogenized in a high-speed blender to produce a stable suspension or colloid.

Formable Dough

2 tablespoons (14g or 0.5 oz) of the fluid binder was mixed with 5 tablespoons (35g or 1.25 oz) of rice flour to produce a soft doughy material which was extruded in a pressure extruding press and the extruded material cut into synthesized kernels.

Setting or Gelling Agent

The synthesized rice grains dropped from the extruder into a body of boiling water containing 1/4 teaspoon (0.7g or 0.025 oz) of calcium chloride or calcium lactate to 10 cups of water (2.25Kg of 80 oz) for setting or gelling the algin. The synthesized rice grains were boiled for five minutes, then removed from the water and drained.

Drying

The drained grains were dried in a heated air dryer at 140 degrees F. (60 degrees C.) for 2 1/2 hours to a normal moisture content of 12 percent to 16 percent by weight. The drying could have been accomplished more quickly by microwave or dielectric heating.

In an alternative process high viscosity algin was used to produce the fluid binder in the proportion of 1 teaspoon (2.8g or 0.1 oz) to 3 cups (680g or 24 oz) of water (0.4 percent of algin by volume). Again, the algin and water were homogenized in a high-speed blender to produce a stable suspension or colloidal aqueous binder. The fluid binder was mixed with powdered rice as described above to produce the soft dough to be extruded. The remainder of the process followed the procedure of the specific example described above.

The type of procedure described above for making synthesized kernels of rice can also be utilized to make synthesized kernels of wheat, bulgur, kidney beans, lima beans, soy beans, peas, wild rice, barley, maize, oats, rye, sorghum, millet, corn and buckwheat. These various types of kernels can incorporate combinations of different types of grain and/or legumes as well as protein, amino acid or analogue of amino acid, flavoring and other food additives as discussed above. Such combinations can provide new and different breakfast cereals that can be served either hot or cold and can include additives to make them highly nutritious. Examples of unique food products follow.

A poultry stuffing mix can have kernels synthesized from a blend of different types of powder obtained from broken or whole pearl grain rice, broken wild rice, broken brown rice and cornmeal mixed with algin fluid binder.

An economical, highly nutritious grain cereal for deprived people is composed of synthesized kernels utilizing powders produced from broken brown rice, broken white rice, and beans. Such powdered materials from which the kernels are synthesized may be mixed in approximately equal parts by weight or volume. The powdered mixture can be fortified with soybean powder which would provide vegetable protein with the carbohydrate of the powdered rice or legume. The amount of soybean powder could be from 4 percent to 300 percent of the weight of the rice or legume powder, preferably 25 percent. Also, oil and/or fat could be incorporated in the synthesized kernels in the proportion of 0 percent to 200 percent by weight of the rice or legume material, preferably 7 percent. The dough can be flavored to taste with salt.

Instead of being extruded, the kernels can be synthesized in the form of rice kernels by being formed in a die. The synthesized kernels can be sprayed with a fluid binder incorporating low viscosity algin and fat while they are moving across a vibrating table or moved as a fluid bed. Subsequently during such movement the kernels can be sprayed with a setting or gelling solution of calcium chloride and air dried.

For variety wheat flour can be substituted for the brown rice powder in the last example.

Snack ready-to-eat bars for use as rations for campers, hikers, soldiers and emergency rations can be made by combining powders selected from wheat flour, rice powder and bean powder in generally equal proportions by weight or volume, combined with suitable additives to flavor and fortify the product.

The synthesized kernels can be cooked for 5 minutes in the hot water into which the synthesized kernels are deposited subsequent to their formation and in a further step can be cooked for an additional 5 minutes such as in a steam environment. The synthesized kernels can be bound together into bars with a small amount of caramel or chocolate for flavoring.

## Claims

1. A process for producing an ungelatinized synthesized non-pasta grain or legume product which comprises powdering grain or legume material, mixing the powdered grain or legume material with a fluid binder to produce formable dough containing from 2 to 3 times as much powdered material as fluid binder forming the dough into synthesized kernels, and exposing the synthesized kernels to a setting agent to set the binder.

2. The process defined in claim 1, including cooking the material from which the kernels are formed for making the synthesized kernels quick-cooking.

3. The process defined in claim 2, including extruding the dough to form the synthesized kernels prior to heating of the kernel-forming material and cooking the synthesized kernels at least partially in hot water following formation of the kernels.

4. The process defined in claim 1, in which the dough for producing the extruded synthesized kernels includes protein or amino acid material permeating the dough homogeneously.

5. A process for producing an ungelatinized synthesized non-pasta grain or legume product which comprises powdering grain or legume material, mixing the powdered grain or legume material with aqueous liquid to produce formable dough, forming the dough into synthesized kernels, supplying binder for the kernel-forming material, and exposing the synthesized kernels to a setting agent containing material adequate to set or gel the binder.

6. A process according to claim 5, in which the binder includes binding material selected from the group consisting of algin, seaweed derivative, chitin derivative, albumin, gelatin, gluten, pectin, agar-agar,

EP 0 194 303 B1

carrageenin, carob gum, guar gum and gum tragacanth.

7. A process according to claim 5, in which the setting agent includes a calcium salt.

8. A process according to claim 7, in which the setting agent contains calcium salt in an amount from 0.01 percent to 10 percent of the water by weight, the calcium salt being calcium chloride or calcium lactate.

9. A process according to claim 5, in which the dough includes coloring or flavoring material permeating the dough homogeneously.

10. A process according to claim 5, in which the dough includes a combination of more than one powdered grain and/or legume material.

11. A process according to claim 5, in which the dough includes powdered rice and at least one additional type of powdered grain or legume material.

12. A process according to claim 6, in which the dough includes powdered rice and albumin.

13. A process according to claim 6, including completely cooking the synthesized kernels and binding the kernels together into a ready-to-eat bar.

**Revendications**

1. Procédé de production d'un produit de céréale ou de légumineuse "non-pasta" synthétisé, non gélatinisé, qui comprend la pulvérisation d'une matière de céréale ou de légumineuse, le mélange de la matière de céréale ou de légumineuse en poudre avec un liant liquide, pour produire une pâte formable contenant de 2 à 3 fois autant de matière en poudre que de liant liquide, la transformation de la pâte en grains (en anglais : kernels) synthétisés, et l'exposition des grains synthétisés à un agent de durcissement pour faire prendre le liant.

2. Procédé suivant la revendication 1, comprenant la cuisson de la matière à partir de laquelle les grains sont formés pour rendre les grains synthétisés à cuisson rapide.

3. Procédé suivant la revendication 2, comprenant l'extrusion de la pâte pour former les grains synthétisés avant le chauffage de la matière formant ces grains, et la cuisson des grains synthétisés au moins partiellement dans de l'eau chaude après la formation des grains synthétisés.

4. Procédé suivant la revendication 1, caractérisé en ce que la pâte destinée à la production des grains synthétisés extrudés comprend une matière protéique ou une matière à amino-acides pénétrant de façon homogène dans la pâte.

5. Procédé de production d'un produit de céréale ou de légumineuse "non-pasta" synthétisé, non gélatinisé, qui comprend la pulvérisation d'une matière de céréale ou de légumineuse, le mélange de la matière de céréale ou de légumineuse pulvérisée avec un liant aqueux pour produire une pâte formable, la transformation de la pâte en grains synthétisés, l'alimentation d'un liant pour la matière formant les grains synthétisés, et l'exposition des grains synthétisés à un agent de durcissement contenant une matière appropriée pour faire durcir ou gélifier le liant.

6. Procédé suivant la revendication 5, dans lequel le liant comprend une matière liante choisie dans le groupe comprenant : algine, dérivé d'algue, dérivé de chitine, albumine, gélatine, gluten, pectine, gélose, carraghénine, gomme de caroube, gomme guar et gomme adragante.

7. Procédé suivant la revendication 5, dans lequel l'agent de durcissement comprend un sel de calcium.

8. Procédé suivant la revendication 7, dans lequel l'agent de durcissement contient un sel de calcium en une quantité de 0,01 à 10 % de l'eau en poids, ce sel de calcium étant du chlorure de calcium ou du lactate de calcium.

**9.** Procédé suivant la revendication 5, dans lequel la pâte comprend une matière colorante ou aromatisante pénétrant de manière homogène dans cette pâte.

**10.** Procédé suivant la revendication 5, dans lequel la pâte comporte une combinaison de plus d'une matière de céréale et/ou de légumineuse en poudre.

**11.** Procédé suivant la revendication 5, dans lequel la pâte comprend du riz en poudre et au moins un type additionnel de matière de céréale ou de légumineuse en poudre.

**12.** Procédé suivant la revendication 10, dans lequel la pâte comprend de l'albumine et du riz en poudre.

**13.** Procédé suivant la revendication 6, comprenant la cuisson complète des grains synthétisés et la liaison de ces grains ensemble pour former une barre ou tablette prête à manger.

**Patentansprüche**

**1.** Verfahren für die Herstellung eines ungelatinisierten, synthetischen, nicht pastenförmigen Getreide- oder Gemüseprodukts mit Pulverisieren von Getreide- oder Gemüsematerial, Mischen dieses pulverisierten Getreide- oder Gemüsematerials mit einem Fluidbindemittel zum Bilden eines formbaren Teiges, der 2- bis 3mal soviel Pulvermaterial als Fluidbindemittel enthält, Formen des Teiges zu Kunstkernen und Einwirken eines Absetzmittels auf die Kunstkerne zum Setzen des Bindemittels.

**2.** Das in Anspruch 1 definierte Verfahren unter Einschluß des Kochens des Materials, aus dem die Kerne geformt werden, um die Kunstkerne schnellkochfähig zu machen.

**3.** Das in Anspruch 2 definierte Verfahren unter Einschluß des Extrudierens des Teiges zur Bildung der Kunstkerne vor dem Erwärmen des kernbildenden Materials und zumindest Teilkochen der Kunstkerne in heißem Wasser nach dem Formen der Kerne.

**4.** Das in Anspruch 1 definierte Verfahren, dem der Teig zum Erzeugen der extrudierten Kunstkerne Protein- oder Aminosäurematerial einschließt, mit dem der Teig homogen durchsetzt ist.

**5.** Verfahren für die Herstellung eines ungelatinierten, synthetischen, nicht pastenförmigen Getreide- oder Gemüseprodukts mit Pulverisieren von Getreide- oder Gemüsematerial, Mischen des pulverisierten Getreide- oder Gemüsematerials mit einer wässrigen Flüssigkeit zum Bilden eines formbaren Teiges, Formen des Teigs zu Kunstkernen, Zuführen eines Bindemittels zum kernbildenden Material und Einwirken eines Absetzmittels auf die Kunstkerne mit einem Wirkstoffanteil zum Setzen oder Gelieren des Bindemittels.

**6.** Verfahren nach Anspruch 5, bei dem das Bindemittel einen Bindemittelbestandteil einschließt, der aus der folgenden Gruppe ausgewählt ist: Algin, Meeresalgenderivat, Chitinderivat, Albumin, Gelatine, Gluten, Pectin, Agar-Agar, Carrageenin, Johannisbrotgummi, Guargummi und Tragantgummi.

**7.** Verfahren nach Anspruch 5, bei dem das Absetzmittel ein Kalziumsalz enthält.

**8.** Verfahren nach Anspruch 7, bei dem das Absetzmittel Kalziumsalz in einer Menge von 0,01 bis 10 Gewichts% des Wassers enthält, wobei das Kalziumsalz Kalziumchlorid oder Kalziumlactat ist.

**9.** Verfahren nach Anspruch 5, bei dem der Teig ein färbendes oder aromatisierendes Material enthält, das den Teig homogen durchsetzt.

**10.** Verfahren nach Anspruch 5, bei dem der Teig eine Zusammenstellung von mehr als einem pulverisierten Getreide- und/oder Gemüsematerial enthält.

**11.** Verfahren nach Anspruch 5, bei dem der Teig pulverisierten Reis und zumindest entweder pulverisiertes Getreide- oder Gemüsematerial enthält.

**12.** Verfahren nach Anspruch 6, bei dem der Teig pulverisierten Reis und Albumin enthält.

12

13. Verfahren nach Anspruch 6 unter Einschluß vollständigen Kochens der Kunstkerne und Zusammenfügens der Kerne zu einem stangenförmigen Fertiggericht.